# EUROPEAN PATENT APPLICATION

(11) **EP 4 650 967 A1**
(43) Date of publication of application: **19.11.2025**
(21) Application number: 24176120.4
(22) Date of filing: 15.05.2024
(51) Int. Cl.: G06F 11/22, G06F 11/36, G06F 11/07, G06F 9/38, G06F 21/71, G06F 21/52

(54) **ELECTRONIC CIRCUIT WITH FIRMWARE ANOMALY DETECTION**

(71) Applicant: Melexis Technologies SA, 2022 Bevaix (CH)
(72) Inventor: ZHUK, Oleksandr, 2022 Bevaix (CH)
(74) Representative: Jacobs, Lambert

(57) **Abstract**

An electronic circuit comprising: a processing unit comprising or connected to a memory containing a firmware with executable instructions; the processing unit comprising: an instruction decoder, instruction registers and an arithmetic Logical Unit; wherein the instruction decoder is configured for receiving instructions, and for converting them into operation codes and operands; and being further configured for generating one or more groupcode corresponding to the received instruction, thereby forming a stream of groupcodes during execution of said firmware by said processing unit; wherein the electronic circuit further comprises a groupcode analyser configured for receiving said stream of groupcodes, and for detecting anomalies in the firmware execution by analysing said stream of groupcodes.

## Description

### Field of the invention

The present invention relates in general to the field of electronic circuits with a programmable processor configured for executing a particular program, and more specifically to embedded circuits or embedded systems comprising a processing unit configured for executing a particular firmware program, and capable of detecting firmware anomalies. The electronic circuit may optionally have one or more peripheral devices and/or sensors.

### Background of the invention

Electronic circuits with a programmable processor, and optionally with one or more peripheral devices and/or sensors, are known in the art.

The term "software" is typically used for a computer program that can be executed on a general purpose computer (e.g. a desktop computer or a laptop computer), upon request from a user. Such software is typically loaded from a hard disk drive that contains many programs from which a user can select. The term "firmware" is typically used for a computer program that is executed on a single-purpose embedded system, such as a printer or a router or a sensor device. In the context of the present invention, the terms "software" and "firmware" and "executable instructions" and "program" or "code" mean the same.

A major advantage of an electronic circuit with a programmable processor is that its behaviour can at least partially be determined by means of executable code which can be modified during development of a product, and even after being sold ("in the field"). Such code can be relatively simple or relatively complex, depending on the application. While a programmable processor offers great flexibility, guaranteeing correct behaviour of the device becomes more difficult, especially when the electronic circuit is capable of interacting with other devices and/or has sensors.

Despite this disadvantage, electronic circuits with a programmable processor (also referred to herein as "programmable devices") have found their way into industrial applications, robotic applications, and automotive applications. While huge efforts are done to minimize erroneous behaviour, (e.g. by source code review sessions, stress testing, etc.), for many systems it is simply impossible to guarantee 100.00% absolute error-free behaviour. If some errors cannot be prevented, (e.g. instructions being misinterpreted because of incident alpha particles originating from space, or caused by cross-talk between copper tracks on a PCB, or by supply voltage instabilities due to an unstable mains supply, or the like), it is desirable to at least detect errors after they have occurred, e.g. to prevent severe consequences (e.g. erasing of the program), or such that corrective action may be taken at system level to guarantee safety, etc.

Thus, there is a need for electronic circuits with a programmable processor that is capable to detect strange or suspicious behaviour of a firmware execution, also referred to herein as "firmware anomalies".

### Summary of the invention

It is an object of embodiments of the present invention to provide an electronic circuit (e.g. an embedded circuit, an ASIC, an MCU, a System-On-Chip, etc.) comprising a programmable processor (e.g. a CPU) configured for executing a particular firmware or software program (also referred to herein as "embedded firmware" or "firmware embedded in the device), wherein the circuit is furthermore capable of detecting anomalies in the firmware (e.g. unintended behaviour) during execution of the firmware.

It is an object of embodiments of the present invention to provide such an electronic circuit that is capable of detecting firmware anomalies shortly after abnormal behaviour, e.g. within 20 ms, or within 10 ms, or within 5 ms, or within 2 ms, or within 1000 µs, or within 500 µs, or within 200 µs, or within 100 µs, or within 50 µs, or within 20 µs).

It is an object of embodiments of the present invention to provide an electronic circuit comprising a programmable processor for executing a particular firmware, that is capable of detecting that the firmware behaves differently than it did when being observed during a characterisation procedure.

It is an object of embodiments of the present invention to provide such an electronic circuit with said functionality, without requiring duplication of the hardware, and without requiring addition of extra code.

According to a first aspect, the present invention provides an electronic circuit (e.g. ASIC, PLD, FPGA, etc) comprising: a processing unit (e.g. CPU, DSP) comprising or connected to a memory (e.g. RAM or flash) containing a firmware with executable instructions; wherein the processing unit comprises at least: an instruction decoder, a plurality of instruction registers and an arithmetic Logical Unit (ALU); wherein the instruction decoder is configured for receiving instructions from said memory, and for converting the received instructions into operation codes and operands; wherein the instruction decoder is further configured for generating one or more groupcodes corresponding to the received instruction (e.g. in accordance with a predefined mapping scheme); wherein a stream of groupcodes is formed during execution of said firmware by said processing unit; and wherein the electronic circuit further comprises a groupcode analyser configured for receiving said stream of groupcodes, and for detecting anomalies in the firmware execution by analysing said stream of groupcodes (e.g. during the execution of the firmware by the processing unit)

In an embodiment, one instruction is converted into one groupcode, but it is also possible that one instruction is transformed into more than one groupcode.

In an embodiment, the electronic circuit is part of an embedded system, implemented in a single module (e.g. PCB) or implemented in a single chip, for example an MCU comprising a processing unit and at least one peripheral device (such as an ADC, a serial interface, etc.).

The electronic circuit may be an integrated circuit, e.g. an ASIC comprising a processing unit and at least one peripheral device (such as an ADC, a serial interface, etc.), e.g. a system-on-chip (SoC).

In an embodiment, the electronic circuit is configured to perform one or more of the following actions, in case an anomaly is detected: to generate an error-signal (e.g. to flag an error detection to another processor which can then take appropriate action); to provide an interrupt request to the processing unit; to provide a suspend request to the processing unit; to halt the execution of the firmware; to reset and to restart (or reboot) the processing unit; to deny write-access access to certain registers.

In an embodiment, the groupcode analyser is configured for testing plausibility of the stream of groupcodes provided by the instruction decoder.

The plausibility-test or parameters of the plausibility-test may be firmware-dependent.

In an embodiment, the groupcode analyser is configured for performing a statistical analysis of the stream of groupcodes provided by the instruction decoder.

In an embodiment, the groupcode analyser is configured for taking into account different execution threads.

In an embodiment, the groupcode analyser maintains a plurality of histograms, e.g. one histogram for each discussion thread.

In an embodiment, the groupcodes are selected from a predefined list having at most 32 items; and the groupcode analyser is configured for determining relative frequencies for at least a subset of individual groupcodes, and to compare the determined relative frequencies with one or more corresponding predefined frequency values (or threshold values, e.g. with an upper limit and/or a lower limit)

As an example, the predefined list may have 16 values, and a histogram of 16 values is generated, and each of these 16 frequencies are periodically monitored.

As another example, the predefined list may have 16 values, but only 9 values are individually monitored. Optionally the other 7 values can be combined, and their combined frequency may be monitored too.

The comparison may comprise for example to test if the measured frequency falls within a predefined range, or is smaller than a first predefined value, or is larger than a second predefined value, or combinations hereof.

In an embodiment, the groupcode-analyser may use a plurality of exponential moving average filters.

In an embodiment, the groupcode analyser is configured for counting how often each individual groupcode occurs over a predefined time-window, and for comparing the measured count values with predefined count-values, (e.g. comparing with a predefined value, taking into account a given tolerance margin).

This is equivalent to saying that a frequency for each individual groupcode is determined, and the determined frequencies are compared with predefined frequencies.

In an embodiment, this is implemented using a set of counters, which are reset at the beginning of the predefined time-window, and read-out at the end of the predefined time-window. This embodiment is very simple to implement, but the verification can only be performed after the duration of the time-window. This may be acceptable for some applications, but may not be acceptable for time-critical applications.

In an embodiment, this is implemented using a memory and a "sliding window". Such implementation offers the advantage that the frequencies of the groupcodes can be updated, and an anomaly can be detected after each new instructions, and thus allowing a faster response.

In an embodiment, the groupcode analyser comprises: a plurality of counters; a plurality of bit values organized in a two-dimensional array having at least two rows and at least eight colums, wherein the number of columns corresponds to the number of different codewords, and wherein the number of rows corresponds to the number of consecutive groupcodes to be analyzed; wherein each newly incoming groupcode is transformed into a one-hot code, which is stored in the first row, after moving the content of the two-dimensional array one row downwards (thus the content of row1 is moved to row2, etc.); and wherein an increment signal for each of the counters is derived from the binary information stored in the two-dimensional array, using combinatorial logic.

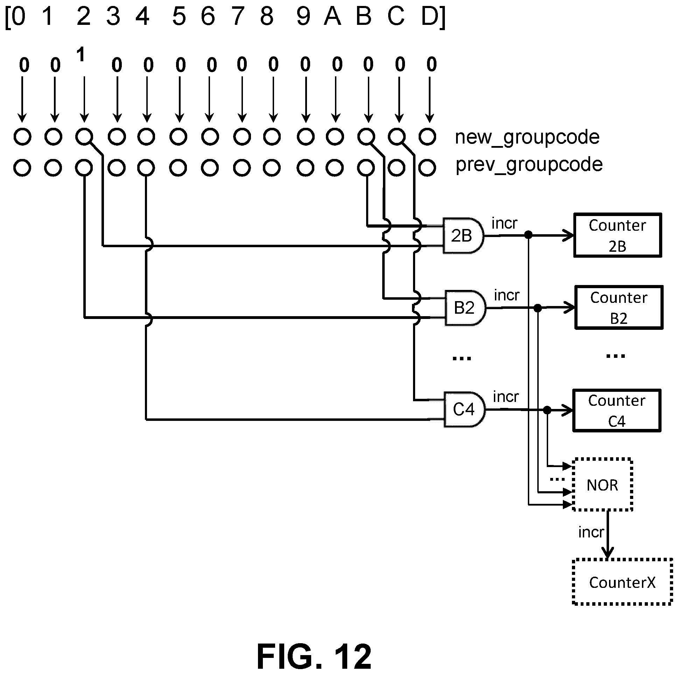

An example of such a circuit is illustrated in FIG. 12.

In an embodiment, the groupcodes are selected from a predefined list having at most 16 items; and the groupcode analyser is configured for determining relative frequencies for at least a subset of pairs of groupcodes, and is configured to compare the determined relative frequencies of these pairs with one or more corresponding predefined frequency values (e.g. with an upper limit and/or a lower limit).

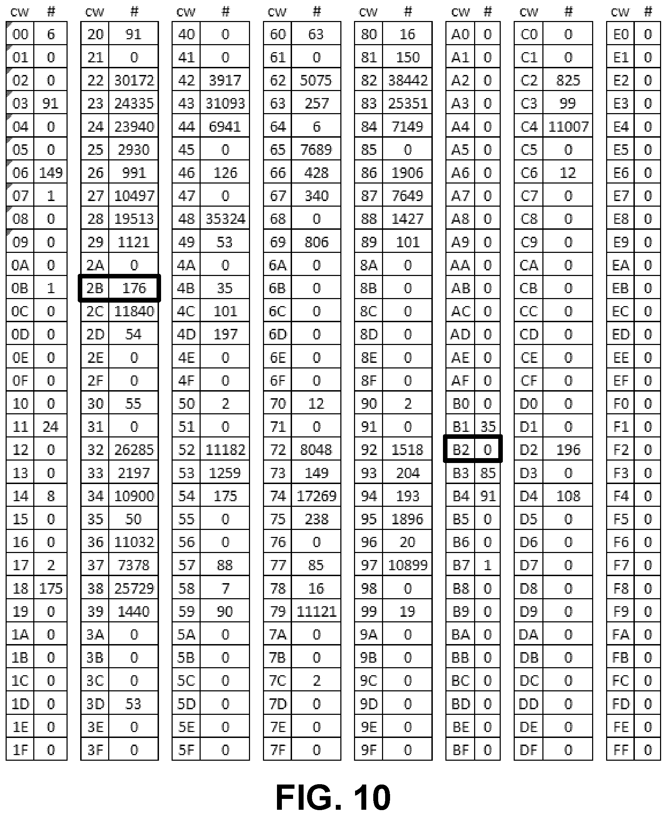

For example, referring to FIG. 10, by actively monitoring a subset of only 26 duos (out of the theoretical 256 possible combinations), a coverage of more than 95% of the peaks can be easily tested.

In an embodiment, the groupcode analyser is configured for testing plausibility of overlapping fragments of the stream of generated groupcodes provided by the instruction decoder.

This can for example be implemented by storing a limited number of groupcodes in a FIFO of a predefined length, and by testing whether the sequence of groupcodes of said predefined length is valid or not (e.g. in accordance with a predefined list of valid sequences). The FIFO may have a length from 2 to 8 groupcodes, for example a length equal to 2 or 3 or 4 or 5 or 6 or 7 or 8 groupcodes.

The idea of this embodiment is that all the groupcodes generated by the instruction decoder are input into the FIFO one by one, and that the content of the FIFO is verified after each individual groupcode is added to the FIFO. It is noted that the FIFO may be implemented as a ring buffer, or by means of a small number of registers and one or more pointers or counters.

In an embodiment, the groupcode analyser comprises a trained neural network.

The neural network may be a Recurrent Neural Network.

In an embodiment, the trained neural network has one input and one output. The input is the groupcode, the output is a boolean value indicative of the detection of a firmware anomaly.

In an embodiment, the trained neural network has two inputs and one output. The two inputs comprise: the groupcode, and a threat-identifier (e.g. a numerical value). The output is a boolean value indicative of the detection of a firmware anomaly.

In an embodiment, the groupcode analyser is configured for testing plausibility of non-overlapping fragments of the stream of generated groupcodes provided by the instruction decoder.

This can for example be implemented by storing a limited number of groupcodes in a FIFO of a predefined length, and by testing whether the sequence of groupcodes of said predefined length is valid or not (e.g. in accordance with a predefined list of valid sequences). The FIFO may have a length from 2 to 8 groupcodes, for example a length equal to 2 or 3 or 4 or 5 or 6 or 7 or 8 groupcodes.

In an embodiment, one groupcode is generated for each individual instruction, and the content of the FIFO is verified while or after or substantially at the same time as that individual instruction is being executed.

In an embodiment, the groupcodes are selected from a predefined list having at least 2 items and at most 32 items, or having at least 4 items and at most 16 items, or having at least 8 items and at most 16 items. Depending on the size of the predefined list, such groupcodes may be represented by 1 to 5 bits.

In an embodiment, the groupcodes are selected from a predefined list containing at least the following four codes: a first code corresponding to an arithmetic operation (such as e.g. an integer operation or a floating point operation), and a second code corresponding to a flow-control operation (such as e.g. a jump, a call, a return), and a third code corresponding to a memory-access operation (such as e.g. a memory-read, or a memory-write operation), and a fourth code corresponding to a peripheral-access operation (e.g. a peripheral-read or a peripheral-write operation).

In an embodiment, the groupcodes are selected from a predefined list containing at least eight codes, including: a first code corresponding to a comparison (such as "test A>B"), a second code corresponding to an integer arithmetic operation (such as e.g. addition, subtraction, multiplication, division), a third code corresponding to a floating point arithmetic operation, a fourth code corresponding to a flow-control operation (such as e.g. a jump, a call, a return), a fifth code corresponding to a memory-read operation (e.g. indexed or direct addressing), a sixth code corresponding to a memory-write operation (e.g. indexed or direct addressing), a seventh code corresponding to a peripheral-read operation, an eight code corresponding to a peripheral-write operation.

In an embodiment, the electronic circuit further comprises at least one peripheral device with a peripheral interface communicatively connected to the processing unit.

In an embodiment, the electronic circuit further comprises at least one peripheral device with a peripheral interface communicatively connected to the processing unit; wherein the peripheral interface comprises at least one register (e.g. a data register or status register), and an access mechanism to selectively allow or deny access to said at least one register; wherein the access mechanism is connected to an output of the groupcode analyzer, and is configured to allow access to said at least one register if the output indicates that no anomaly is detected, and is configured to deny access to said at least one register if the output indicates that an anomaly is detected.

The peripheral may selected from the group consisting of: a serial communication port (e.g. a UART, an SPI interface, an I2C interface, a SENT interface).

Each peripheral device may be associated with a particular address-range, and may require a specific correct groupcode sequence for obtaining data and/or for providing data.

In an embodiment, the electronic circuit further comprises: at least one sensor (e.g. a magnetic sensor, a light sensor, an infrared sensor, a pressure sensor, a voltage sensor, a current sensor), and an analog-to-digital convertor (ADC) for digitizing at least one signal originating from said at least one sensor; and wherein the processing unit is further configured for reading at least one output of the ADC.

The ADC is considered a peripheral device of the processing unit, having at least a read-address for reading a digitized value. The ADC may be associated with a particular address-range, and may require a specific correct groupcode sequence for obtaining data.

An anomaly may for example also be detected by the peripheral device itself, when a write-operation is attempted to this address-location.

These and other objectives are accomplished by embodiments of the present invention.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

**FIG. 1** shows an illustrative example of a CPU structure, known in the art.
**FIG. 2** shows an illustrative example of a CPU structure proposed by the present invention.
**FIG. 3** shows an illustrative example of a second (somewhat more complex) CPU structure proposed by the present invention.
**FIG. 4** shows an illustrative example of an embedded system comprising a CPU proposed by the present invention, e.g. a CPU having an architecture as illustrated in FIG. 2 or FIG. 3.
**FIG. 5** shows an illustrative example of a set of four groupcodes, as can be used in embodiments of the present invention.
**FIG. 6** shows an illustrative example of a set of eight groupcodes, as can be used in embodiments of the present invention.
**FIG. 7** shows an illustrative example of a series of instructions of a particular firmware program in assembler code (first column), with corresponding groupcodes (second column), and a digital representation of the groupcode (using 4 bits in this example).
**FIG. 8** and **FIG. 9** show an illustrative example of a groupcode analysis of a first firmware program by monitoring individual groupcodes during a calibration test. **FIG. 8** shows the number of occurrences of individual groupcodes. **FIG. 9** shows a histogram of these 16 groupcodes.
**FIG. 10** and **FIG. 11** show an illustrative example of a groupcode analysis of the first firmware program by monitoring overlapping series of two consecutive groupcodes. **FIG. 10** shows the number of occurrences of these 256 combinations. **FIG. 11** shows a histogram of these 256 combinations.
**FIG. 12** shows a hardware circuit that may be used to efficiently gather statistical data about combinations of two consecutive groupcodes.
**FIG. 13** and **FIG. 14** show an illustrative example of a groupcode analysis of a second firmware program by monitoring individual groupcodes. **FIG. 13** shows the number of occurrences of individual groupcodes. **FIG. 14** shows a histogram of these 16 groupcodes.
**FIG. 15** and **FIG. 16** show an illustrative example of a groupcode analysis of the second firmware program by monitoring overlapping series of two consecutive groupcodes. **FIG. 15** shows the number of occurrences of these 256 combinations. **FIG. 16** shows a histogram of these 256 combinations.
**FIG. 17** and **FIG. 18** show an illustrative example of a groupcode analysis of a third firmware program by monitoring individual groupcodes. **FIG. 17** shows the number of occurrences of individual groupcodes. **FIG. 18** shows a histogram of these 16 groupcodes.
**FIG. 19** and **FIG. 20** show an illustrative example of a groupcode analysis of the third firmware program by monitoring overlapping series of two consecutive groupcodes. **FIG. 19** shows the number of occurrences of these 256 combinations. **FIG. 20** shows a histogram of these 256 combinations.
**FIG. 21** illustrates a known mechanism for controlling access to certain registers of a peripheral device, using a locking/unlocking mechanism that allows access to these registers only after a predefined access-sequence to a key register.
**FIG. 22** illustrates an access-control mechanism proposed by the present invention, wherein access to the registers of the peripheral unit is provided based on the result of the groupcode analyzer.

The drawings are only schematic and are non-limiting. In the drawings, the size of some of the elements may be exaggerated and not drawn on scale for illustrative purposes. Any reference signs in the claims shall not be construed as limiting the scope. In the different drawings, the same reference signs refer to the same or analogous elements.

### Detailed description of illustrative embodiments

The present invention will be described with respect to particular embodiments and with reference to certain drawings but the invention is not limited thereto but only by the claims.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

The terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

In this document, IC means "Integrated Circuit" or "chip". Examples are: ASIC, PLD, FPGA.

In this document, ASIC means "Application Specific IC".

In this document, PLD means "Programmable Logic Device".

In this document, FPGA means "Field Programmable Gate Array".

In this document, ADC means "Analog to Digital convertor", also referred to as "digitizer".

In this document, UART means "Universal Asynchronous receiver-transmitter", and refers to a serial bus or protocol, depending on the context.

In this document, 12C or IIC means "Inter-Integrated Circuit", and refers to a well known serial communication bus or protocol.

In this document, ECU means "Electronic Control Unit", for example a processor of an automotive system or subsystem.

In this document, the expressions "software", "software code", "firmware", "program", "executable code", "executable instructions", "computer instruction words" mean the same. In the context of the present invention, the firmware program may be stored in a non-volatile memory, e.g. ROM or flash. This non-volatile memory may be embedded in the same ASIC, or may be external to the ASIC, but embedded in a particular device, e.g. a printer.

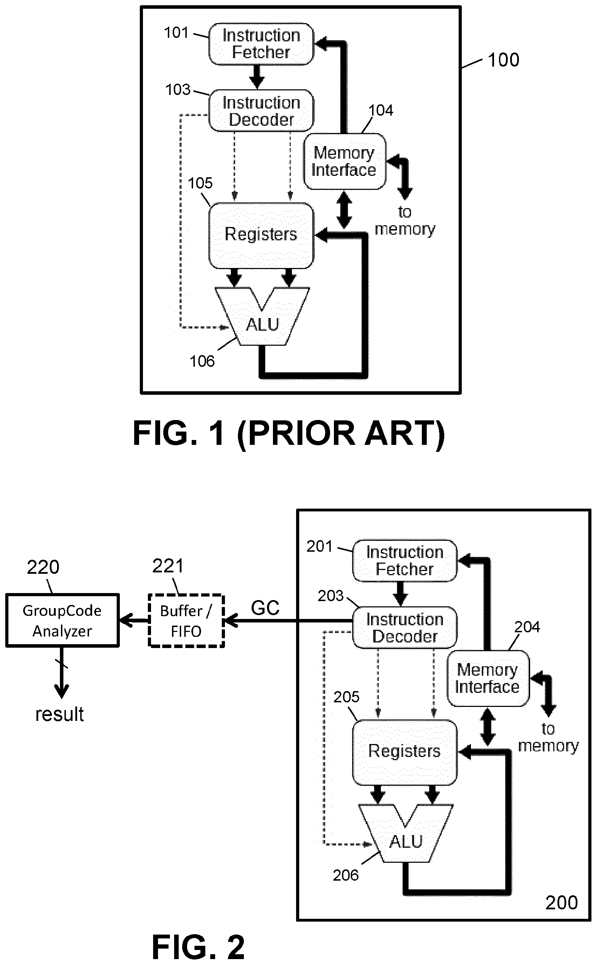

In this document, the expression "CPU" or "central processing unit" or "processing unit" or "processor" mean the same. In the context of the present invention, a CPU comprises at least an "instruction decoder" (or command decoder), and a plurality of registers, and an ALU ("Arithmetic-logic unit"). An example of a simple CPU architecture is illustrated in FIG. 1.

In this document, a "DSP" or "Digital Signal Processing unit" is considered a special kind of CPU. Its instruction set may offer more or dedicated functions, such as e.g. floating point arithmetic, MAC operations (multiply-accumulate operations), FFT (Fast Fourier Transform), etc.

In this document, ALU means "Arithmetic-logic unit". It is the part of a "processing unit" that carries out arithmetic and logic operations on the operands in computer instruction words.

In this document, FPU means "Floating Point Unit".

In this document, MPU means "Memory Protection Unit". This unit normally takes care to prohibit firmware from access to non-existent memory, and translates virtual addresses to physical addresses.

In this document, software may be abbreviated as SW, firmware may be abbreviated as FW, hardware may be abbreviated as HW.

In this document, a "one-hot code" is a group of bits with only a single high (1) bit and all the others bits are low (0).

The present invention relates in general to the field of electronic circuits with a programmable processor configured for executing a particular program, and more specifically to embedded circuits or embedded systems comprising a processing unit configured for executing a particular firmware program. The electronic circuit may optionally have one or more peripheral devices (such as e.g. an ADC, a UART interface, an SPI interface, an I2C interface, etc.). The electronic circuit may optionally have one or more sensors (e.g. magnetic sensors, such as Hall sensors, magneto-resistive (MR) sensors; light sensors, infrared (IR) sensors, pressure sensors, temperature sensors, etc.)

Referring to the Figures.

**FIG. 1** shows an illustrative example of a relatively simple CPU structure 100, known in the art. Since it is well known how such a structure works and what each block does, a brief explanation will suffice in order to understand the principles of the present invention.

An instruction fetcher 101 retrieves an instruction from program memory (e.g. ROM or flash). The location in program memory to be read is determined by a program counter PC (not explicitly shown), which stores a number that identifies the current position in the program. An instruction decoder 103 breaks the fetched instruction into parts that have significance to other portions of the CPU. The way in which the numerical instruction value is interpreted is defined by the CPU's instruction set architecture (ISA). Often, one group of numbers in the instruction, called the "opcode", indicates which operation to perform. The remaining parts of the number usually provide information required for that instruction, such as "operands" for an addition operation. Such operands may be given as a constant value (called an immediate value), or as a place to locate a value: e.g. a register or a memory address, as determined by some addressing mode. During execution of the instruction, various portions of the CPU are temporarily connected (routing) so they can perform the desired operation. If, for instance, an addition operation was requested, an arithmetic logic unit (ALU) 106 will be connected to a set of inputs and a set of outputs. The inputs provide the numbers to be added, and the outputs will contain the final sum. The ALU 106 contains the circuitry to perform simple arithmetic and logical operations on the inputs (like addition and bitwise operations such as e.g. AND, OR, XOR, NOT). The result(s) of the execute step are written to some form of memory, e.g. to an internal CPU register 105 for quick access by subsequent instructions, or to a location in main memory (e.g. RAM) via memory interface 104. Some types of instructions manipulate the program counter PC rather than directly produce result data.

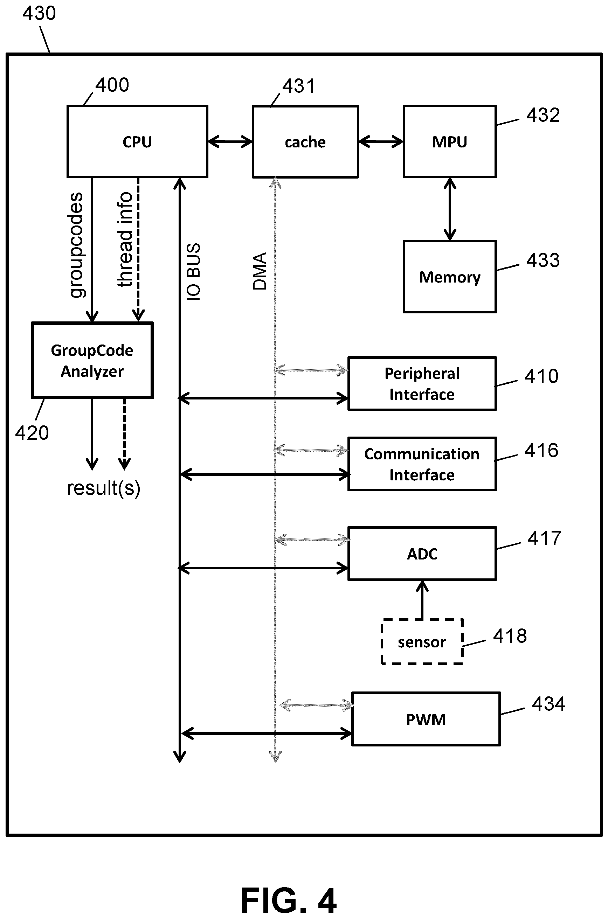

The CPU 100 is typically part of a larger electronic circuit (not shown in FIG. 1), for example an MCU comprising a processing unit and at least one peripheral device (e.g. an ADC, a serial interface, etc.), or for example an embedded system 430 like the one illustrated in FIG. 4, further comprising at least one of the following: a peripheral interface 410, a communication interface 416, an analog-to-digital convertor (ADC) 417, a sensor 418, a memory 433, cache 431, etc.

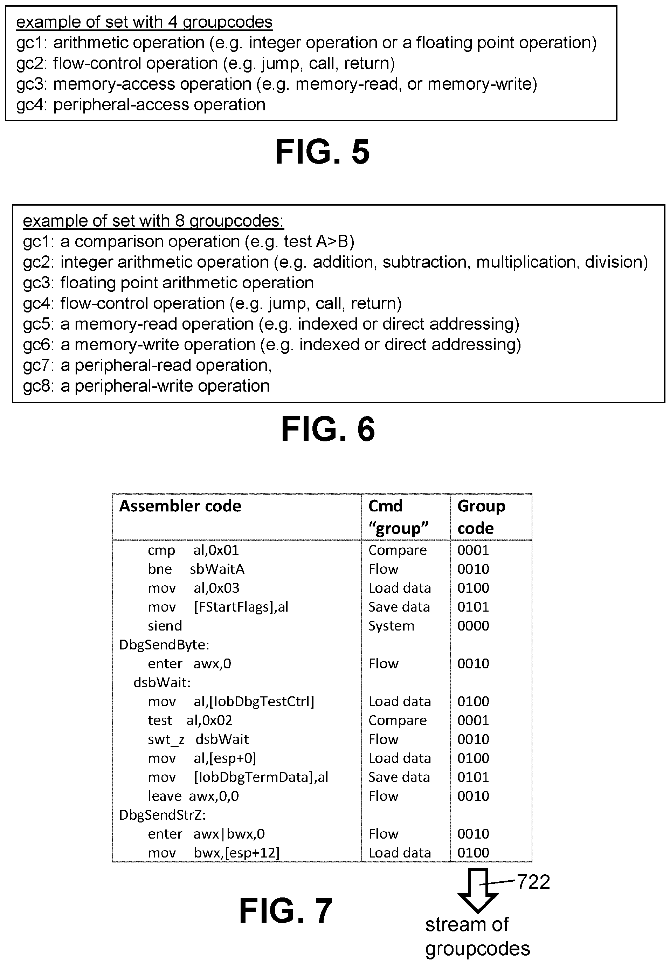

**FIG. 2** shows an illustrative example of a CPU structure 200 proposed by the present invention, which can be seen as a variant of the CPU structure 100 of FIG. 1. The main difference is that the instruction decoder 203 is not only configured for converting the received instructions into operation codes ("op codes") and operands, but is furthermore configured for generating one or more groupcode (GC) corresponding to the received instructions, e.g. in accordance with a predefined mapping scheme, as will be explained further in FIG. 5 to FIG. 7. In certain embodiments, one groupcode is provided per received instruction, but in other embodiments (e.g. with very long instruction words, VLIW) one received instruction may result in multiple groupcodes. This is a first underlying principle of the present invention.

According to a second underlying principle of the present invention, the electronic circuit has a groupcode analyzer 220 that receives the stream of groupcodes generated by the instruction decoder, and that analyzes this stream of groupcodes to detect a firmware anomaly. The groupcode analyzer 220 may be part of the CPU 200, or may be situated outside of the CPU 200, depending on the implementation. The groupcode analyzer 220 may be implemented in several ways, for example as a trained neural network (implemented in hardware or in software or partially in hardware and partially in software), or may be implemented in a dedicated hardware circuit (e.g. as a finite state machine) or in firmware running in a second CPU (e.g. in a watchdog processor), or combinations hereof. The groupcodes may be provided directly to the groupcode analyzer 220, or may be buffered (e.g. in a circular buffer or in a FIFO 221 or the like).

While not explicitly shown, the groupcode analyzer 220 may also receive a second input signal or a message or an identifier indicative of an execution thread. This is particularly useful if the CPU has hardware provisions for switching between various threads. As will be described further, the groupcode analyzer 220 may use a different set of parameters and/or threshold values, depending on the execution thread.

The groupcode analyzer 220 is configured to analyze the stream of groupcodes in order to detect a firmware anomaly, and provides at least one output signal "result" indicative of an anomaly detection. In certain embodiments, at least two results are provided, e.g. a short-term result (e.g. based on the detection of a "forbidden sequence" of two or more consecutive groupcodes), and a long-term result (e.g. based on an abnormal frequency of occurrence of a particular groupcode), as will be explained further.

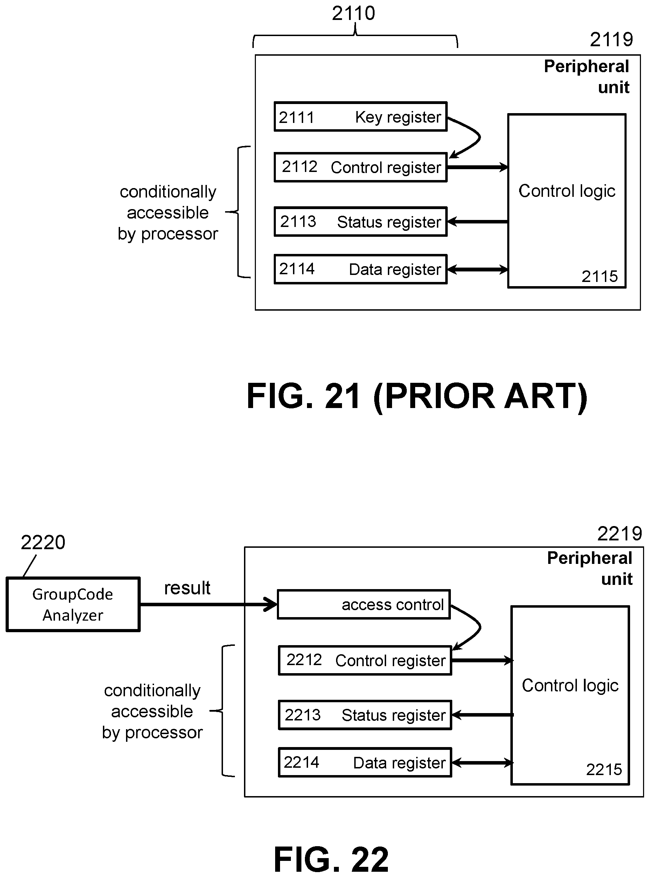

Depending on the application and the implementation, the electronic circuit comprising the CPU and the groupcode analyzer 220 may act in various ways when a firmware anomaly is detected, for example in one or more of the following ways:
- by outputting an error-signal e.g. to flag an error detection to an external processor (e.g. an ECU) which can then take appropriate action; In this case, the result may for example be provided to a dedicated hardware pin of the packaged device.
- by providing an interrupt request to the processing unit; in this case the result may be provided to an interrupt pin of the CPU itself (not explicitly shown);
- by providing a suspend request to the processing unit, for example for that particular thread. The suspend request should suspend the execution of the given thread, preferably with a flag indicating that the execution is abnormal. Depending on the implementation, the following may happen, for example: in case a "supervisor thread" is also running on the processing unit, this supervisor thread will detect that one of the threads in the system is suspended, e.g. due to a firmware abnormality. The "supervisor thread" may then take appropriate action, e.g. by informing another processor, e.g. an external processor (e.g. an ECU) that an anomaly was detected, which in turn, may for example halt the processor, e.g. by providing a soft-reset (e.g. without a power-down) or by causing a hard-reset or a reboot of the faulty processing unit.
- to halt the execution of the firmware;
- to reset and to restart (reboot) the processing unit;
- to control (e.g. allow or deny) access (e.g. write-access) to certain registers, for example of a peripheral device; in this case the result may be provided to an "access control circuit" of the peripheral unit (e.g. as illustrated in FIG. 22).
- by informing a "test and debug controller" or a "watchdog controller" that a firmware anomaly is detected. The "test and debug controller" or "watchdog controller" may then for example halt the CPU and reboot the CPU. The test and debug controller may memorize the halt condition, and perhaps trigger a particular diagnostic test, or a memory-test or the like after the next start-up, and/or may inform an external processor (e.g. an ECU).

It is noted that the principles of the present invention, including (i) the conversion of instructions into groupcodes, and (ii) the analysis of the stream of groupcodes, can be added to many other CPU architectures, for example, but not limited to RISC architecture, MIPS architecture, ARM architecture. The CPU architecture shown in FIG. 1 and FIG. 2 is only a very simple architecture, to keep the explanation simple.

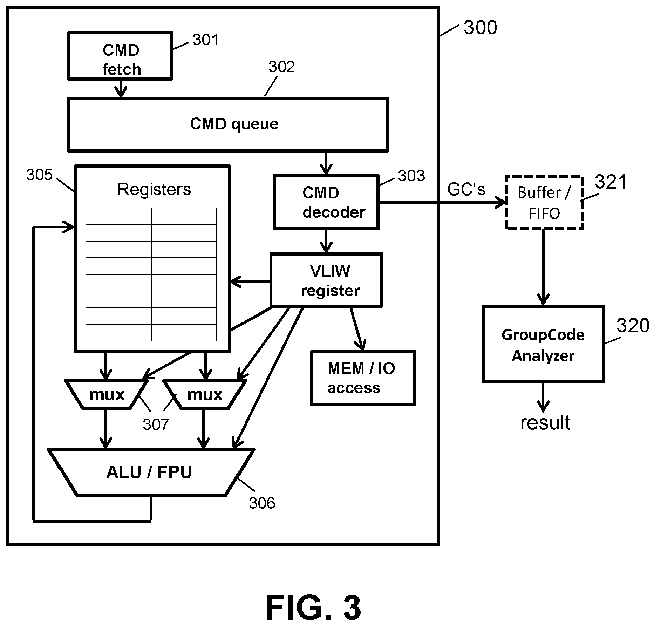

**FIG. 3** shows an illustrative example of a second, somewhat more complex CPU structure 300 proposed by the present invention. This CPU 300 also has an instruction fetcher (or command fetcher) 301, and also has an instruction decoder (or command decoder) 303, and also has an arithmetic or logic unit (ALU / FPU) 306 which in this example may be or may comprise a floating point unit. As can be seen, this CPU 300 comprises also other hardware blocks, such as a command queue 302, multiplexers 307, a VLIW ("very long instruction word") register, etc.

According to principles of the present invention, the instruction decoder 303 is not only configured for converting the received instructions into operation codes ("op codes") and operands, but is furthermore configured for generating one or more groupcode (GC) corresponding to the received instructions, e.g. in accordance with a predefined mapping scheme; and there is furthermore a groupcode analyzer 220 configured to receive the stream of groupcodes generated by the instruction decoder 303, directly or indirectly (e.g. via a buffer or a FIFO 321), and configured to analyse the stream of groupcodes in order to detect a firmware anomaly.

Everything else described above for FIG. 2 is also applicable here, mutatis mutandis. For example:
- the Groupcode analyzer 320 may also have a second input port (not shown), or a register for receiving information regarding the execution thread being performed;
- the Groupcode analyzer 320 may have multiple outputs (not shown), for example a first output which is routed to a reset-circuit (not explicitly shown), a second output routed to an interrupt node (not explicitly shown) of the CPU, and a third output routed to an external processor (e.g. an ECU);
- the Groupcode analyzer 320 may comprise for example a trained Neural Network, or a hardware circuit comprising counters configured for gathering statistical information (see e.g. FIG. 12), or may be implemented in a second programmable device, e.g. in a micro-controller that functions as a watchdog, or combinations hereof. The buffer / FIFO 321 may be incorporated in said micro-controller.

**FIG. 4** shows an illustrative example of an embedded system 430 comprising a CPU 400 proposed by the present invention, e.g. a CPU having an architecture as illustrated in FIG. 2 or FIG. 3 with a special instruction decoder 203, 303 that provides groupcodes, and with at least one of the following: a peripheral unit 410, a communication interface 416 (such as e.g. a UART interface or an I2C interface or a SENT interface), an analog-to-digital convertor (ADC) 417, one or more sensors 418 (e.g. one or more magnetic sensors, such as horizontal Hall sensors, magneto-resistive (MR) sensors, light sensors, infra-red (IR) sensors, pressure sensors, temperature sensors, etc.), a PWM generator block 434 (pulse width modulator), etc.

The groupcode analyzer 420 is incorporated in this embedded system 430 as a separate block. The groupcode analyzer 420 has a least one input for receiving a stream of groupcodes from the CPU, directly or indirectly, e.g. via a Buffer or FIFO, which is not explicitly shown here, because it can be considered to be part of the groupcode analyzer 420. As explained above, the groupcode analyzer 420 may receive a second signal or a second value with threading information. The groupcode analyzer 420 has at least one output for providing a result indicative of a detection of a firmware anomaly, but may have multiple outputs. The output may be a boolean value for indicating whether or not an anomaly has been detected, or may be a numerical value (e.g. an integer value or a floating point value), e.g. a confidence level or a sanity indicating a probability or a likelihood that the system is functioning correctly. This value may be sent to another block or to another processor (e.g. an ECU) which may determine that a firmware anomaly has occurred based on this confidence level, e.g. by testing that the confidence level is lower than a predefined threshold value at any moment in time, and/or by testing that the confidence level is lower than a predefined threshold value over a predefined time period.

There are multiple possible schemes to convert instructions into groupcodes, and the present invention is not limited to one particular scheme. Preferably the groupcodes are selected from a predefined list having at least four and at most 32 groupcodes.

**FIG. 5** shows an illustrative example of a set of four groupcodes, including:
- a first groupcode related to arithmetic operations (e.g. integer operation or a floating point operation);
- a second groupcode related to flow-control operation (e.g. jump, call, return);
- a third groupcode related to memory-access operation (e.g. memory-read, or memory-write)
- a fourth groupcode related to peripheral-access operation

If the list of possible groupcodes has at most four items, each groupcode can be represented by two bits.

**FIG. 6** shows an illustrative example of a set of eight groupcodes, including:
- a first groupcode related to comparison operations (e.g. test A>B);
- a second groupcode related to integer arithmetic operation (e.g. addition, subtraction, multiplication, division);
- a third groupcode related to floating point arithmetic operation;
- a fourth groupcode related to flow-control operation (e.g. jump, call, return);
- a fifth groupcode related to memory-read operations (e.g. indexed or direct addressing);
- a sixth groupcode related to memory-write operations (e.g. indexed or direct addressing);
- a seventh groupcode related to peripheral-read operations;
- an eighth groupcode related to peripheral-write operations;

If the list of possible groupcodes has at most eight items, each groupcode can be represented by three bits.

The list of eight groupcodes of FIG. 6 can be seen as a more detailed version of the list of four groupcodes of FIG. 5, wherein gc1 of FIG. 5 is split in three subgroups (one for comparison operations, one for integer operations, one for floating point operations), and wherein gc3 of FIG 5 is split in two subgroups (one for memory read operations, one for memory write operations), and gc4 of FIG. 5 is also split in two subgroups (one for peripheral read operations, one for peripheral write operations).

In preferred embodiments, the operands are converted into 4 to 16 groupcodes. Such groupcodes can be represented by two or three or four bits. In order to perform statistics of individual groupcodes, 4 to 16 counters may be used. In order to perform statistics of two consecutive groupcodes, 16 (=4*4) to 256 (=16 to 16) counters may be used. Using more than 256 counters may become impractical and/or undesirable. As will be explained further, it was surprisingly found that very good detection can be achieved also without such a large number of counters.

**FIG. 7** shows an illustrative example of a series of instructions of a particular firmware program in assembler code (first column), with corresponding groupcodes (second column), and a digital representation of the groupcode (using 4 bits in this example).

When this program is being executed, a stream of groupcodes 722 is provided by the instruction decoder 103, 203, 303 to a groupcode analyzer 120, 220, 320, 420, which will analyze this stream, for example in order to detect a firmware anomaly.

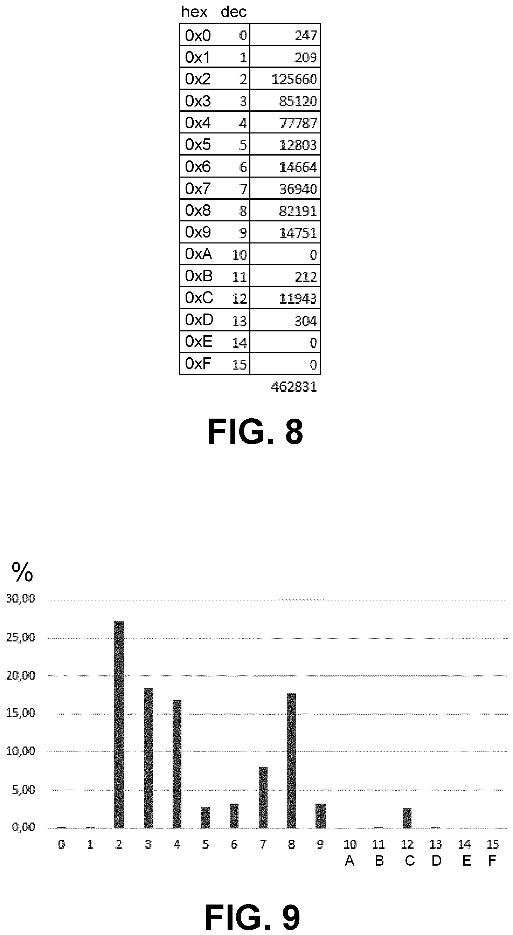

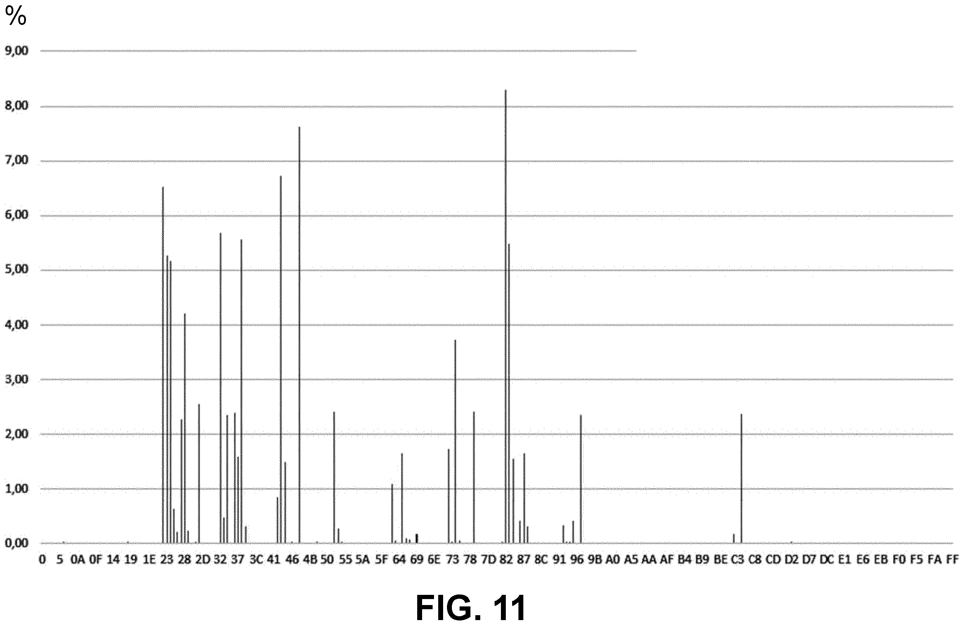

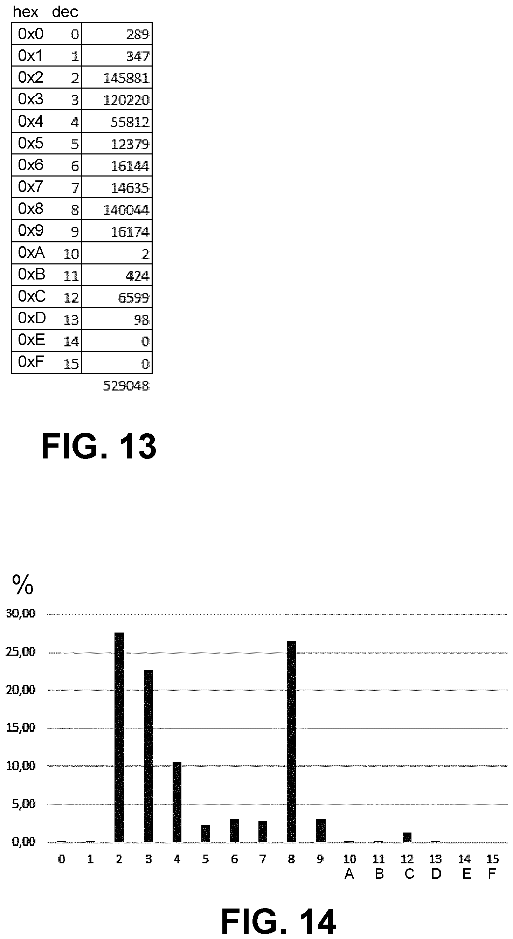

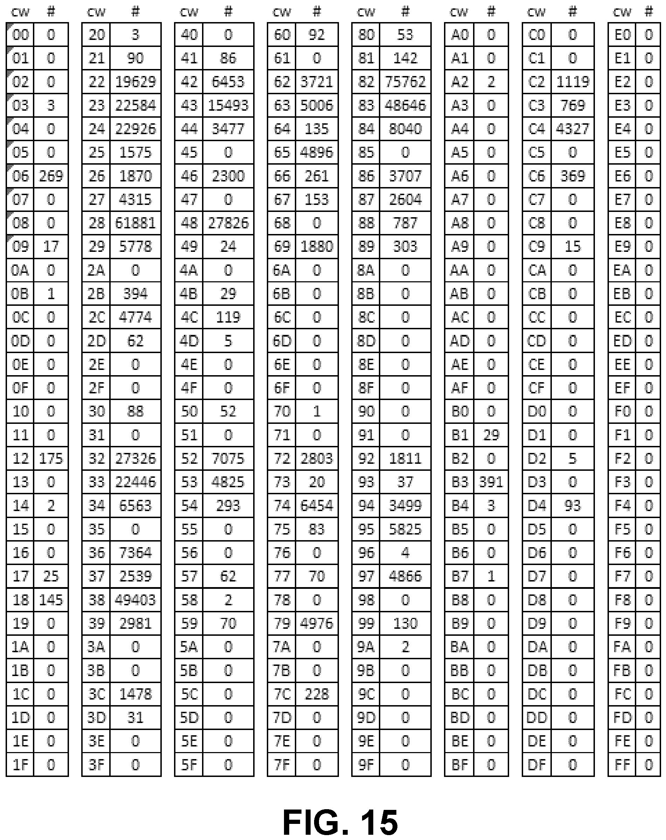

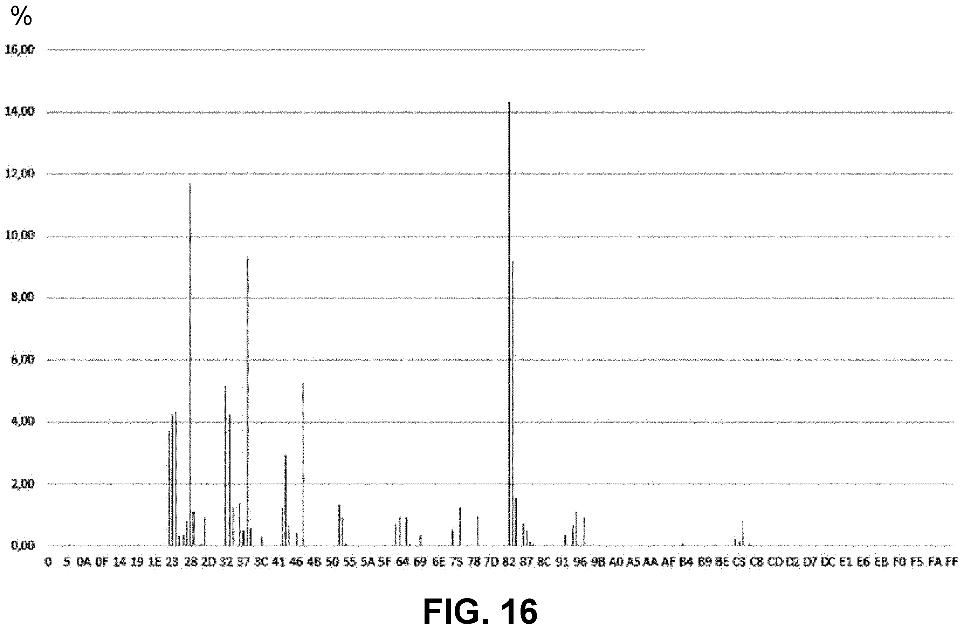

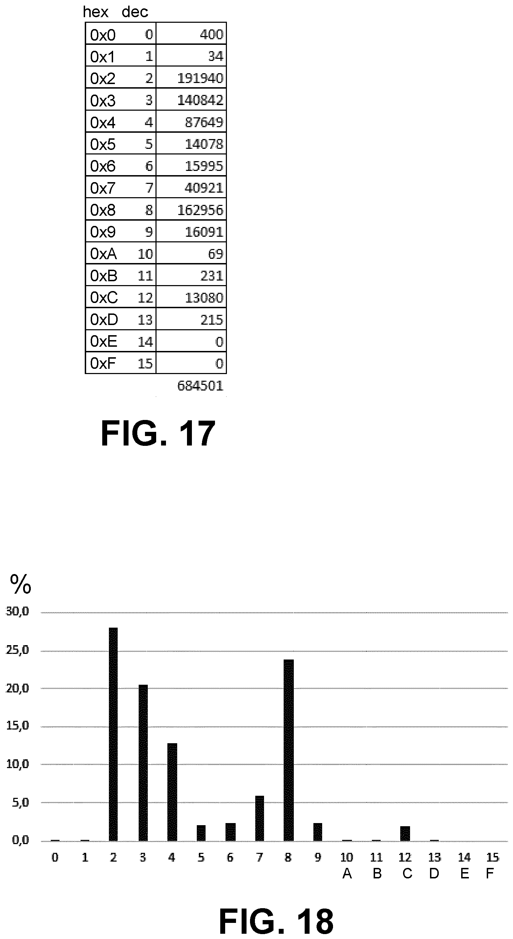

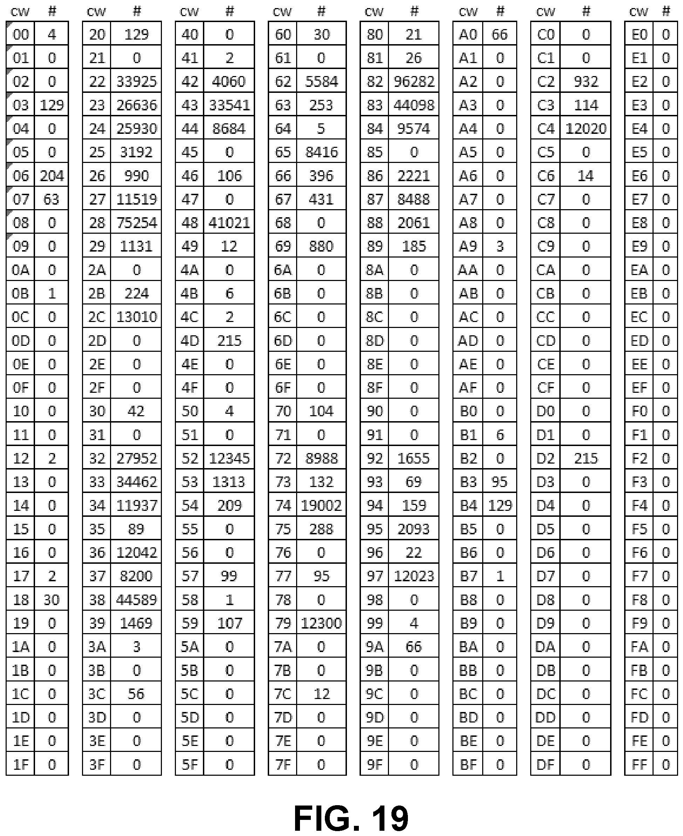

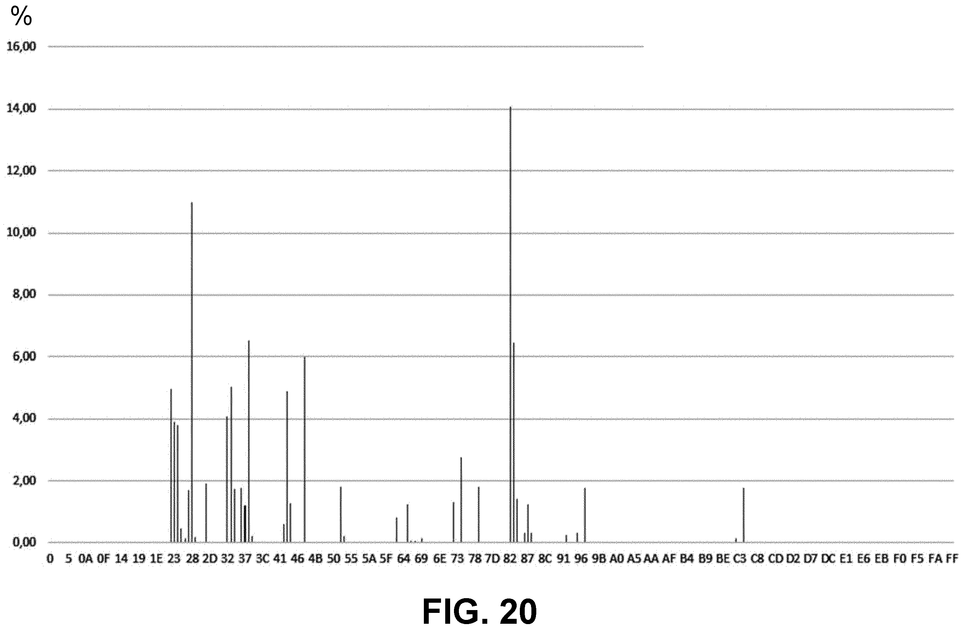

A skilled reader will understand that, If a firmware program would e.g. only contain arithmetic operations, and memory-access operations, but no flow-control operations (e.g. jump, call, return), that the stream of groupcodes would be 100% predictable, but in practice that is not the case, inter alia because in many programs there are flow-control operations, and/or because communication information is not always immediately available to be read, etc. This is one of the challenges that the inventors of the present invention were confronted with. Many experiments were performed, and several solutions are proposed, for example:
i) using a trained neural network having a single input (said stream of groupcodes), and having a single output (e.g. a boolean value indicating whether the stream of groupcodes is valid or invalid; or a numerical value corresponding to a confidence level that the stream of groupcodes is valid or invalid), or having two outputs (one boolean value and one numerical value);
ii) using a trained neural network having two inputs (said stream of groupcodes; and a signal indicative of an execution thread), and having a single output (e.g. a boolean value indicating whether the stream of groupcodes is valid or invalid), or having two outputs (one boolean value and one numerical value);
iii) by monitoring individual groupcodes, and performing statistical analysis over a predefined time-period, e.g. periodically or using a sliding time-window, or over a predefined number of samples (e.g. as explained further in FIG. 8 and FIG. 9, or in FIG. 13 and FIG. 14, or in FIG. 17 and FIG. 18);
iv) by monitoring "groupcode-words" formed by a series of two or three or four or more consecutive groupcodes, and performing statistical analysis over a predefined time-period, e.g. periodically or using a sliding time-window, , or over a predefined number of samples (e.g. as explained further in FIG. 10 and FIG. 11, or in FIG. 15 and FIG. 16, or in FIG. 19 and FIG. 20);
but the present invention is not limited to these examples, and other techniques to analyse the stream of groupcodes can also be used.

It is also possible to monitor only a subset of groupcodes, or only a subset of all possible "groupcode-words". FIG. 12 will describe an illustrative circuit that may be used as part of an implementation.

In order to better appreciate the power of these solutions, several simulations were performed. It is noted that the solutions described herein are not limited to a particular type of CPU, and can e.g. be used in combination with a RISC core, a MIPS core, or an ARM core, just to name a few.

**FIG. 8** and **FIG. 9** show an illustrative example of a groupcode analysis of a first firmware program labelled "dat_csp-stat" performing mainly a computational task, using 14 different groupcodes, represented in decimal notation as 0 to 13, or in hexadecimal notation as 0x0 to 0xD.

**FIG. 8** shows a list of sixteen counters, with the result of the counters after 462831 groupcode samples. **FIG. 9** shows a histogram of these 16 counter-values. As can be seen, there are huge differences between the occurrences of the various groupcodes, which can advantageously be used to detect anomalies during execution of the firmware program, e.g. in case it is detected that the occurrences start to strongly deviate from this "normal-behaviour-signature".

In a practical implementation, the groupcode analyser 220, 320, 420 may for example reset all counters, then start counting how often each of the groupcodes occurs, and after a predefined number N of groupcodes, e.g. after 100 samples, or 200, or 500, or 1000, or 2000, or 5000, or another suitable number, check if one or some or all of the counter values have values in predefined intervals. The smaller the value of N, the faster an anomaly can be detected, but the larger the variation on the counter values will be. A skilled reader having the benefit of the present disclosure can easily select a suitable number for N, depending on the application, e.g. depending on how fast an anomaly has to be detected.

**FIG. 10** and **FIG. 11** show an illustrative example of another groupcode analysis of the same stream of groupcodes originating from the first firmware program ("dat_csp-stat"), but this time by monitoring overlapping series of two consecutive groupcodes, in the sense that the first and second groupcode of the stream form a first "codeword" (cw), the second and the third groupcode of the stream form a second codeword (cw), etc. Since in the example each individual groupcode is represented by 4 bits (value from 0x0 to 0xF, in hexadecimal notation), the codewords of two consecutive codewords are values that can be represented by 8 bits, with a value ranging from 0x00 to 0xFF, in hexadecimal notation.

**FIG. 10** shows the list of 16x16=256 counters (the prefix 0x is omitted).

**FIG. 11** shows a histogram of these 256 counter-values.

As can be seen, there are only a relatively small number of relatively high peaks (e.g. there are only 26 peaks larger than 1.00 %). This observation can be used in an embodiment of a groupcode analyser that would count the occurrences of these 26 peaks in 26 counters (for 0x22, 0x23, 0x24, 0x27, 0x28, 0x2C, 0x32, 0x34, 0x36, 0x37, 0x38, 0x43, 0x44, 0x48, 0x52, 0x62, 0x65, 0x72, 0x74, 0x79, 0x82, 0x83, 0x84, 0x87, 0x97, 0xC4), and ignoring the other (smaller peaks). Since these counters represent about 94% of all groupcode occurrences, abnormal behaviour of these peaks (i.e. having a chance of occurrence much higher or much lower than was observed during a calibration procedure) is a good indication of a software anomaly.

Another observation is that the other (256-26)=230 codewords combined, should occur less than 6% of the time. Hence another Groupcode analyser may simply keep a single counter, and test if combinations of two consecutive groupcodes matches one of these 230 codewords (which can e.g. easily be hardcoded using a limited number of comparisons, e.g. using a binary search technique), and if TRUE, increment this single counter value. Since the cumulative probability of these codewords is about 5,83%, this counter-value should be around 6 ± a predefined tolerance margin after 100 codewords, and/or should be around 58 ± a predefined tolerance margin after 1000 codewords, etc.

It is of course also possible to combine these two approaches in a Groupcode analyser that uses 27 counters: 26 counters for the "high peaks", and one additional counter for the "rest" (see e.g. CounterX in FIG. 12).

Another observation is that certain combinations should never occur, such as e.g. the combination 0xB2 should never occur, despite the fact that the combination 0x2B occurs in fact very often. This example demonstrates that monitoring series of two or more consecutive codewords is more powerful than monitoring only single codewords. Of course other examples can be found, and all of them can be tested or a subset of them can be tested. It is pointed out that this third test does not require the monitoring of 100 or 200 or 500 or 1000 codewords, but a software error can be flagged immediately if the combination 0xB2 was detected. In an embodiment, the Groupcode Analyser detects one or more or all codewords of length equal to 2 that should never occur (e.g. having a value of zero in the table of FIG. 10). Of course, this may be added as a third test to the Groupcode-analyser 220, 320, 420, or it can be provided as a separate output (fast response), while the above described test(s) (based on 26 counters, or based on 26+1 counter) can be used in a slow response output.

In a variant, a single occurrence of the combination 0xB2 is not immediately output as an error, but would be considered "highly suspicious". This may be implemented for example by adding a "penalty counter" and by adding a certain number of penalty points for each "suspicious occurrence. This counter may be reset for example after 100 or 200 or 500 or 1000 samples. If the counter value is larger than a predefined threshold, an error would be output.

**FIG. 12** shows a hardware circuit that may be used to obtain the above mentioned 26 counter values, or the above mentioned 26+1=27 counter values. The basic idea is to use a first series of bits, or digital values (e.g. stored in D-flip-flops), or a first register, referred to as "new_groupcode", storing the most recent groupcode represented in "one-hot-code", i.e. by setting only one of the bits to '1', and setting all other bits to '0'. There is also a second series of bits or D-flip-flops or second register, referred to as "prev_groupcode", which stores the value of the previous groupcode value also in one-hot code. Each time a new groupcode sample is provided to the groupcode-analyser, the bit-values of "new_groupcode" are shifted into "prev_groupcode". In the example shown, there are 14 possible groupcodes, hence the maximum one-hot value is 14, and thus 14 bits are provided for new_groupcode and for prev_groupcode, but of course, the present invention is not limited to 14 bits.

The hardware circuit further comprises a number of counters, e.g. the above mentioned 26 counters, only 3 of which are explicitly shown, namely Counter2B, CounterB2, and CounterC4. Each of these counters is provided with an "increment-signal", which (in this example) is formed by an AND-gate with two inputs. For example, the counter2B will be incremented at a next clock, if the output of the AND-gate with label 2B is logical '1', which is the case if the respective bits of the new_groupcode and the prev_groupcode are both equal to '1', and which is equal to logical '0' otherwise. Each of the 26 counters gets a corresponding increment signal from a corresponding two-input AND-gate.

As can be seen, there is also provided a counterX for counting the "other 230 combinations". The "increment"-signal for this counter counterX can be formed by combinatorial logic based on the individual bit-levels in manners known in the art, or (as is shown) can also be derived by a NOR-gate of the other 26 increment signals, or an equivalent circuit. Of course, many variants of this circuit are possible. For example: there can be more or less than 26 counters; there can be more or less than 14 bits to store the one-hot codes.

The counters are preferably binary counters, with a reset and an increment function. In certain embodiments, the counters do not wrap-around, but clip to a maximum value. In the example of FIG. 8, the highest counter value is 125660, but in a practical implementation such a resolution is not required, and a counter having for example for example six to twelve bits, may be sufficient, and a counter having for example eight to ten bits may be preferred. A six-bit counter is capable to count up to 63, an eight-bit counter can count to 255, a ten-bit counter can count to 1023, and a twelve-bit counter can count to 4095.

In the example shown, combinations of only two groupcodes are made, but the same technique can also easily be used for combinations of three consecutive groupcodes, e.g. by adding a third row of bits or D-flip-flops or a third register under prev_groupcode, and by using three-input AND-gates to form increment signals for the counters.

Once available, a second processor may then read-out these counter values, and compare them with predefined threshold levels. The threshold levels may be determined during a calibration test of a particular firmware code.

In a practical implementation, all the bits and all the counters may be reset for example by a second processor, then the counting begins, and after a certain number of samples, or after a certain time, the second processor may stop the counting, and may read-out the counter-values, and may test if the counter values fall within their expected range, and/or are higher than a particular value, and/or are lower than a particular value. This statistical analysis does not need to occur within a single clock-cycle of the main CPU.

**FIG. 13** and **FIG. 14** show an illustrative example of a groupcode analysis of a second firmware program ("dat_diag-stat") performing mainly a diagnostic task, using 14 different groupcodes, represented in decimal notation as 0 to 13, or in hexadecimal notation as 0x0 to 0xD.

**FIG. 13** shows a list of sixteen counters, similar to those of FIG. 8.

**FIG. 14** shows a histogram of the 16 counter-values of FIG. 13, and is a variant of the histogram of FIG. 9. Comparison of the histogram of FIG. 14 and the histogram of FIG. 9 shows that there are significant differences between these code fragments, for example, the groupcode 0x3 occurs about 18% of the time in FIG. 9 but about 22% in FIG. 14; and the groupcode 0x8 occurs about 18% of the time in FIG. 9 but about 26% of the time in FIG. 14.But there are also important similarities between FIG. 9 and FIG. 14, for example, both graphs have four main peaks at 0x2, 0x3, 0x4 and 0x8.

From these graphs it can be understood that It is very well possible to choose a single set of threshold values that works for both the first firmware program as well as the second firmware program.

As suggested above, a better anomaly detection may want to use different values for the first and the second firmware program, which is possible by also taking into account the execution thread.

**FIG. 15** and **FIG. 16** show an illustrative example of another groupcode analysis of the same stream of groupcodes originating from the second firmware program ("dat_diag-stat"), but this time by monitoring overlapping series of two consecutive groupcodes, similar to FIG. 10 and FIG. 11, but based on the same stream of groupcodes as was used in FIG. 13 and FIG. 14.

**FIG. 15** shows the list of 16x16=256 counters,

**FIG. 16** shows a histogram of these 256 counter-values.

Similar observations as mentioned above are applicable here, except that there are only 19 peaks of at least 1.0%, and they accumulate to only about 84,6%. Thus, the other 256-19=237 potential combinations represent about 15,4% of the occurrences. It may be better in this case to monitor the 32 peaks for which the probability of occurrence is at least 0.50%. These 32 peaks amount to a total of about 94,87%. It is of course also possible to monitor more than 32 peaks, or less than 19 peaks.

**FIG. 17** and **FIG. 18** show an illustrative example of a groupcode analysis of a third firmware program ("dat_i2c-stat") performing mainly a communication task, using 14 different groupcodes, represented in decimal notation as 0 to 13, or in hexadecimal notation as 0x0 to 0xD.

**FIG. 17** shows a list of sixteen counter values, similar to those of FIG. 8 and FIG. 13.

**FIG. 18** shows a histogram of the 16 counter-values of FIG. 17, and is a variant of the histogram of FIG. 9 and FIG. 14. Comparison of the histogram of FIG. 18 and the histogram of FIG. 14 shows again that there are significant differences between these code fragments, but also large similarities.

**FIG. 19** and **FIG. 20** show an illustrative example of another groupcode analysis of the same stream of groupcodes originating from the third firmware program ("dat_i2c-stat"), but this time by monitoring overlapping series of two consecutive groupcodes, similar to FIG. 15 and FIG. 16, but based on the same stream of groupcodes as was used in FIG. 17 and FIG. 18.

**FIG. 19** shows the list of 16x16=256 counter values,

**FIG. 20** shows a histogram of these 256 counter-values.

Similar observations as mentioned above are applicable here. In this particular case, 26 peaks of at least 1.0% high represent about 95,3% of the data.

**FIG. 21** illustrates a known mechanism for controlling access to certain registers 2112, 2113, 2114 of a peripheral unit 2119, using a locking/unlocking mechanism that allows access to these registers only after a predefined access-sequence to a particular register 2111, e.g. key register.

The inventors came to the idea to use the groupcode analyzer described above not only for the detection of firmware anomalies, but its output (or one of its outputs) may also be used for access control.

**FIG. 22** illustrates an access-control mechanism proposed by the present invention, wherein access to the registers 2212, 2213, 2214 of the peripheral unit 2219 is provided based on the result of the groupcode analyzer 2220. It can be appreciated from the above description that a result with a short delay (e.g. based on the detection of invalid combinations like 0xB2 in the example of FIG. 10) is preferably used for access control.

### REFERENCE NUMBERS:

| (modulo 100): | |
|---|---|
| -00 | CPU |
| -01 | Instruction Fetcher, Command fetcher |
| -02 | Command queue |
| -03 | Instruction Decoder, Command decoder |
| -04 | Memory interface |
| -05 | Registers |
| -06 | ALU |
| -07 | mux |
| -10 | peripheral interface |
| -11 | key register |
| -12 | control register |
| -13 | status register |
| -14 | data register |
| -15 | control logic |
| -16 | communication interface |
| -17 | ADC |
| -18 | sensor |
| -19 | peripheral unit |
| -20 | Groupcode Analyzer |
| -21 | Buffer/FIFO |
| -22 | stream of groupcodes |
| -30 | Embedded System |
| -31 | cache |
| -32 | MPU (Memory Protection Unit) |
| -33 | memory (e.g. RAM, ROM, flash) |
| -34 | PWM generator block |

## Claims

1. An electronic circuit comprising:
- a processing unit (100; 200; 300; 400) comprising or connected to a memory containing a firmware with executable instructions;
wherein the processing unit (100; 200; 300; 400) comprises at least: an instruction decoder (103; 203; 303), a plurality of instruction registers and an arithmetic Logical Unit (ALU);
wherein the instruction decoder (103; 203; 303) is configured for receiving instructions from said memory, and for converting the received instructions into operation codes and operands;
**characterised in that**
- the instruction decoder (103; 203; 303) is further configured for generating one or more groupcodes corresponding to the received instruction,
wherein a stream of groupcodes is formed during execution of said firmware by said processing unit;
and wherein the electronic circuit further comprises a groupcode analyser (120; 220; 320; 420) configured for receiving said stream of groupcodes, and for detecting anomalies in the firmware execution by analysing said stream of groupcodes.

2. An electronic circuit according to claim 1,
wherein the electronic circuit is configured to perform one or more of the following actions, in case an anomaly is detected:
- to generate an error-signal;
- to provide an interrupt request to the processing unit;
- to provide a suspend request to the processing unit;
- to halt the execution of the firmware;
- to reset and to restart (reboot) the processing unit;
- to deny write-access access to certain registers.

3. An electronic circuit according to any of the previous claims,
wherein the groupcode analyser (120; 220; 320; 420) is configured for testing plausibility of the stream of groupcodes provided by the instruction decoder.

4. An electronic circuit according to any of the previous claims,
wherein the groupcode analyser (120; 220; 320; 420) is configured for performing a statistical analysis of the stream of groupcodes provided by the instruction decoder.

5. An electronic circuit according to any of the previous claims,
wherein the groupcode analyser (120; 220; 320; 420) is configured for taking into account different execution threads.

6. An electronic circuit according to any of the previous claims,
wherein the groupcodes are selected from a predefined list having at most 32 items;
and wherein the groupcode analyser is configured for determining relative frequencies for at least a subset of individual groupcodes, and to compare the determined relative frequencies with one or more corresponding predefined frequency values.

7. An electronic circuit according to any of the previous claims,
wherein the groupcodes are selected from a predefined list having at most 16 items;
and wherein the groupcode analyser is configured for determining relative frequencies for at least a subset of pairs of groupcodes, and to compare the determined relative frequencies of these pairs with one or more corresponding predefined frequency values.

8. An electronic circuit according to any of the previous claims,
wherein the groupcode analyser is configured for testing plausibility of overlapping fragments of the stream of generated groupcodes provided by the instruction decoder.

9. An electronic circuit according to claim 8,
wherein the groupcode analyser comprises a trained neural network.

10. An electronic circuit according to any of the claims 1 to 7,
wherein the groupcode analyser is configured for testing plausibility of non-overlapping fragments of the stream of generated groupcodes provided by the instruction decoder.

11. An electronic circuit according to any of the previous claims,
wherein the groupcodes are selected from a predefined list having at least two items and at most 32 items, or having at least four items, and at most 16 items.

12. An electronic circuit according to any of the previous claims,
wherein the groupcodes are selected from a predefined list containing at least the following four codes: a first code corresponding to an arithmetic operation, and a second code corresponding to a flow-control operation, and a third code corresponding to a memory-access operation, and a fourth code corresponding to a peripheral-access operation.

13. An electronic circuit according to any of the claims 1 to 12,
wherein the groupcodes are selected from a predefined list containing at least eight codes, including: a first code corresponding to a comparison, a second code corresponding to an integer arithmetic operation, a third code corresponding to a floating point arithmetic operation, a fourth code corresponding to a flow-control operation, a fifth code corresponding to a memory-read operation, a sixth code corresponding to a memory-write operation, a seventh code corresponding to a peripheral-read operation, an eight code corresponding to a peripheral-write operation.

14. An electronic circuit according to any of the previous claims,
wherein the electronic circuit further comprises at least one peripheral device with a peripheral interface communicatively connected to the processing unit; and
wherein the peripheral interface comprises at least one register, and an access mechanism to selectively allow or deny access to said at least one register;
wherein the access mechanism is connected to an output of the groupcode analyzer, and is configured to allow access to said at least one register if the output indicates that no anomaly is detected, and is configured to deny access to said at least one register if the output indicates that an anomaly is detected.

15. An electronic circuit according to any of the previous claims,
wherein the electronic circuit further comprises: at least one sensor, and an analog-to-digital convertor (ADC) for digitizing at least one signal originating from said at least one sensor;
and wherein the processing unit is further configured for reading at least one output of the ADC.
